# EUROPEAN PATENT APPLICATION

(11) **EP 4 782 982 A1**
(43) Date of publication of application: **29.07.2026**
(21) Application number: 24878536.2
(22) Date of filing: 21.06.2024
(51) Int. Cl.: G06F 3/06, G06F 9/50

(54) **DATA STORAGE MANAGEMENT METHOD, SYSTEM, AND DEVICE**

(30) Priority: 16.10.2023 CN 202311338185
(71) Applicant: HUAWEI TECHNOLOGIES CO., LTD., Shenzhen 518129 (CN)
(72) Inventor: QIN, Zhong, Shenzhen, Guangdong 518129 (CN); LIU, Chuan, Shenzhen, Guangdong 518129 (CN)
(74) Representative: Thun, Clemens
(86) International application number: PCT/CN2024/100800
(87) International publication number: WO 2025/081883

(57) **Abstract**

Embodiments of the present disclosure provide a data storage management method, a system, and a device, and belong to the field of data storage technologies. In the method, a host determines, based on a data amount of valid data in a source storage disk in a plurality of storage disks and available space of a destination storage disk in the plurality of storage disks, migration information corresponding to the source storage disk; the host sends the migration information to the source storage disk; the source storage disk sends valid data of a corresponding data amount to a destination storage disk based on the migration information; and the destination storage disk stores the valid data. The source storage disk sends local valid data to the destination storage disk based on the migration information sent by the host. According to the method, the host only needs to calculate the migration information and send the migration information to the source storage disk, the source storage disk directly sends the valid data to the destination storage disk, and the host does not need to receive data or send data, so that occupation of hardware resources of the host can be reduced.

## Description

The present disclosure claims priority to Chinese Patent Application No. 202311338185.2, filed on October 16, 2023 and entitled "DATA STORAGE MANAGEMENT METHOD, SYSTEM, AND DEVICE", which is incorporated herein by reference in its entirety.

### TECHNICAL FIELD

The present disclosure relates to the field of data storage technologies, and in particular, to a data storage management method, a system, and a device.

### BACKGROUND

During use of a storage system, a large amount of expired data is often generated (the expired data is usually referred to as invalid data, and correspondingly unexpired data is referred to as valid data).

In a conventional technology, a host may periodically select some storage disks (which may be referred to as source storage disks) with excessive invalid data, read valid data in these storage disks to the host, then distribute the valid data to other storage disks, and delete or invalidate all data in the source storage disks.

The foregoing processing manner occupies a large quantity of hardware resources of the host.

### SUMMARY

The present disclosure provides a data storage management method, a system, and a device, which can perform data storage management. The technical solutions are as follows.

According to a first aspect, a data storage management method is provided. The method is applied to a storage system. The storage system includes a host and a plurality of storage disks. The method includes: The host determines, based on a data amount of valid data in a source storage disk in the plurality of storage disks and available space of a destination storage disk in the plurality of storage disks, migration information corresponding to the source storage disk, where the migration information corresponding to the source storage disk includes a destination storage disk corresponding to the source storage disk and a data amount of valid data to be sent by the source storage disk to the destination storage disk; the host sends the migration information to the source storage disk; the source storage disk sends the valid data of the corresponding data amount to the destination storage disk based on the migration information; and the destination storage disk stores the valid data.

The host may trigger garbage collection processing periodically (for example, once a week or once a month), or an administrator may manually trigger garbage collection processing. For example, the administrator may operate a management terminal to send a trigger message to a host node, to trigger garbage collection. After triggering garbage collection processing, the host may determine the source storage disk and the destination storage disk in the plurality of storage disks included in the storage system. A process of garbage collection processing is mainly to allocate valid data in each source storage disk and migrate the valid data to each destination storage disk.

When the at least one source storage disk and the at least one destination storage disk in the plurality of storage disks are determined, the host may automatically select the at least one source storage disk and the at least one destination storage disk based on storage space usage of each storage disk in the storage system, or the operator may manually select the at least one source storage disk and the at least one destination storage disk.

According to the method, the host only needs to calculate the migration information and send the migration information to the source storage disk, the source storage disk directly sends the valid data to the destination storage disk, and the host does not need to receive data or send data, so that occupation of hardware resources of the host can be reduced.

In a possible implementation, after the destination storage disk stores the valid data, the host may update metadata, and corresponding processing is as follows: The destination storage disk sends storage location information of the valid data to the source storage disk; the source storage disk can send the storage location information to the host each time receiving the storage location information sent by the destination storage disk; and the host updates the metadata based on the storage location information.

Before the valid data is migrated, the host should have recorded metadata corresponding to the valid data. The metadata may include a data identifier of the data, a disk identifier of the destination storage disk, a physical address for storing the valid data, and the like. After the migration process, the metadata corresponding to the valid data changes, and the metadata needs to be updated. After completing storing the valid data sent by the source storage disk, the destination storage disk may send a storage complete notification to the source storage disk. The storage complete notification may carry the storage location information. The storage location information may include the disk identifier of the destination storage disk, and a data identifier and a physical address of each piece of the valid data. The host updates the metadata based on the storage location information.

In this way, the metadata is updated accurately and in time, and normal data reading is ensured.

In a possible implementation, the host sends a deletion notification to the source storage disk. After receiving the notification, the source storage disk deletes the stored valid data and stored invalid data.

The host may send the deletion notification after updating the metadata, or may send the deletion notification after receiving the storage location information, or may send the deletion notification after sending the migration information.

In addition, in another implementation, the host may not send the deletion notification to each source storage disk. In this case, each source storage disk may retain all data stored before the migration notification is received for a fixed period of time (for example, one hour) and then delete the data.

In this way, space of a storage disk can be released in time, thereby increasing storage resource utilization of the storage system.

In a possible implementation, the migrated valid data may be regenerated as check data and store the check data, and corresponding processing is as follows: The host determines, based on a data amount of the valid data in the source storage disk, a data amount of the check data that is to be generated by the source storage disk and corresponding to the valid data; the host determines, based on the data amount of the check data and available space of the check data storage disk, check data storage information corresponding to the source storage disk, where the check data storage information corresponding to the source storage disk includes a check data storage disk corresponding to the source storage disk and a data amount of check data to be sent by the source storage disk to the check data storage disk; then the host sends the check data storage information to the source storage disk; the source storage disk generates check data corresponding to the valid data; and the source storage disk sends the check data of the corresponding data amount to the check data storage disk based on the check data storage information sent by the host.

Any source storage disk may correspond to one check data storage disk, or may correspond to a plurality of check data storage disks. After determining the data amount of the check data to be generated by each source storage disk, the host may send a check notification to each source storage disk. The check notification carries check data storage information corresponding to the source storage disk. The source storage disk generates, based on the check data storage information and a check data generation algorithm, check data and sends the check data to a corresponding check data storage disk. The check data storage disk receives and stores the check data. Then, the check data storage disk may feed back a check data storage complete notification to the host. The host may notify a check data storage disk in which original check data of the source storage disk is located to delete the original check data of the source storage disk.

In addition, when there is only one check data storage disk in the storage system, the host may send the pre-selected check data storage disk to the source storage disk in advance. In this case, the check data storage information may not be sent to the source storage disk any more, and after each source storage disk generates the check data, all check data may be sent to the check data storage disk.

In this way, the check data is generated by the source storage disk, and the host does not need to run the check data generation algorithm, so that occupation of hardware resources of the host can be effectively reduced.

In addition, the check data may alternatively be generated in the destination storage disk. Generation processing of the check data is performed by the source storage disk, and the host does not need to run the check data generation algorithm, so that occupation of hardware resources of the host can be effectively reduced.

In a possible implementation, the source storage disk is a storage disk in which a proportion of a data amount of stored invalid data in a total amount of stored data exceeds a proportion threshold, and the destination storage disk is N storage disks with largest available space in the plurality of storage disks, where N is an integer greater than or equal to 2.

In this way, the selected source storage disk has relatively much invalid data, and the invalid data can be cleared more effectively, thereby reducing storage resource occupation. The selected destination storage disk has relatively large remaining space, which is more conducive to load balancing of the storage system.

In a possible implementation, each source storage disk copies locally stored valid data to cache space; and reads the valid data corresponding to the destination storage disk from the stored valid data in the cache space based on the data amount corresponding to the destination storage disk, and sends the valid data to the destination storage disk.

The valid data and the invalid data in the source storage disk may be stored in a mixed manner. After receiving the migration information, each source storage disk may first sort the valid data in the source storage disk, and then send the valid data of the corresponding data amount to each corresponding destination storage disk. Each source storage disk may divide the valid data copied to the cache space into at least one data strip with a fixed data amount. Then, the source storage disk may send the valid data of the corresponding data amount to the corresponding destination storage disk based on the destination storage disk in the migration information and the data amount corresponding to the destination storage disk.

In this way, the foregoing processing is performed by the source storage disk, so that a processing amount of the host can be reduced, and occupation of hardware resources of the host can be reduced.

According to a second aspect, a data storage management method is provided. The method is applied to a storage system. The storage system includes a host and a plurality of storage disks. The method is performed by the host, and the method includes: based on a data amount of valid data in a source storage disk in the plurality of storage disks and available space of a destination storage disk in the plurality of storage disks, determining migration information corresponding to the source storage disk, where the migration information corresponding to the source storage disk includes a destination storage disk corresponding to the source storage disk and a data amount of valid data to be sent by the source storage disk to the destination storage disk; and send the migration information to the source storage disk, where the migration information indicates the source storage disk to send the valid data to the destination storage disk.

According to the method, the host only needs to calculate the migration information and send the migration information to the source storage disk, the source storage disk directly sends the valid data to the destination storage disk, and the host does not need to receive data or send data, so that occupation of hardware resources of the host can be reduced.

In a possible implementation, after sending the migration information to the source storage disk, the host may update metadata, and corresponding processing is as follows: receiving storage location information that is of the valid data in the corresponding destination storage disk and that is sent by the source storage disk; and updating the metadata based on the storage location information of the valid data.

In this way, the metadata is updated accurately and in time, and normal data reading is ensured.

In a possible implementation, the host may send a deletion notification to the source storage disk.

In this way, space of a storage disk can be released in time, thereby increasing storage resource utilization of the storage system.

In a possible implementation, the host may generate and send check data storage information, and corresponding processing is as follows: based on a data amount of the valid data in the source storage disk, determining a data amount of check data that to be generated by the source storage disk and that corresponds to the valid data; based on a data amount of check data to be generated by the source storage disk and available space of the check data storage disk, determining check data storage information corresponding to the source storage disk, where the check data storage information corresponding to the source storage disk includes a check data storage disk corresponding to the source storage disk and a data amount of check data to be sent by the source storage disk to the check data storage disk; and sending the check data storage information to the source storage disk.

In this way, the host does not need to run the check data generation algorithm, so that occupation of hardware resources of the host can be effectively reduced.

In a possible implementation, the source storage disk is a storage disk in which a proportion of a data amount of stored invalid data in a total amount of stored data exceeds a proportion threshold, and the destination storage disk is N storage disks with largest available space in the plurality of storage disks, where N is an integer greater than or equal to 2.

In this way, the selected source storage disk has relatively much invalid data, and the invalid data can be cleared more effectively, thereby reducing storage resource occupation. The selected destination storage disk has relatively large remaining space, which is more conducive to load balancing of the storage system.

According to a third aspect, a data storage management method is provided. The method is applied to a storage system. The storage system includes a host and a plurality of storage disks. The method is performed by a first storage disk in the plurality of storage disks, and the method includes: receiving migration information sent by the host, where the migration information indicates that the first storage disk is a source storage disk, and includes a destination storage disk corresponding to the source storage disk and a data amount of valid data to be sent by the source storage disk to the destination storage disk; sending the valid data of the corresponding data amount to the destination storage disk based on the migration information.

According to the method, the source storage disk receives the migration information sent by the host, the source storage disk directly sends the valid data to the destination storage disk, and the host does not need to receive data or send data, so that occupation of hardware resources of the host can be reduced.

In a possible implementation, each source storage disk copies locally stored valid data to cache space; and for each destination storage disk, the valid data corresponding to the destination storage disk is read from the stored valid data in the cache space based on the data amount corresponding to the destination storage disk, and the valid data is sent to the destination storage disk.

In this way, the foregoing processing is performed by the source storage disk, so that a processing amount of the host can be reduced, and occupation of hardware resources of the host can be reduced.

In a possible implementation, after the valid data of the corresponding data amount is sent to the destination storage disk based on the migration information, the source storage disk may receive storage location information of the valid data sent by the destination storage disk, and then send the storage location information of the valid data to the host.

In this way, the storage location information of the updated valid data is sent to the host accurately and in time, and normal data reading is ensured.

In a possible implementation, the source storage disk may receive a deletion notification sent by the host, and delete the valid data and invalid data that are stored before the data storage management is performed.

In this way, space of a storage disk can be released in time, thereby increasing storage resource utilization of the storage system.

In a possible implementation, the source storage disk may generate and send check data, and corresponding processing is as follows: receiving check data storage information sent by the host, where the check data storage information includes a check data storage disk corresponding to the source storage disk and a data amount of check data to be sent by the source storage disk to the check data storage disk; generating check data corresponding to the valid data; and sending the check data of the corresponding data amount to the check data storage disk based on the check data storage information.

In this way, the host does not need to run the check data generation algorithm, so that occupation of hardware resources of the host can be effectively reduced.

According to a fourth aspect, a data storage management method is provided. The method is applied to a storage system. The storage system includes a host and a plurality of storage disks. The method is performed by a second storage disk in the plurality of storage disks, and the method includes: receiving valid data sent by a first storage disk in the plurality of storage disks, where the first storage disk is a source storage disk, and the second storage disk is a destination storage disk corresponding to the source storage disk; and storing the valid data.

According to the method, the destination storage disk receives and stores valid data, and can manage data stored in the storage system.

In a possible implementation, after the valid data is stored, the destination storage disk may send storage location information of the valid data to the first storage disk.

In this way, the metadata is updated accurately and in time, and normal data reading is ensured.

According to a fifth aspect, a storage system is provided. The storage system includes a host and a plurality of storage disks, and is configured to perform the method provided in the first aspect and the possible implementations of the first aspect.

According to a sixth aspect, a host is provided. The host belongs to a storage system. The storage system includes the host and a plurality of storage disks. The host is configured to perform the method provided in the second aspect and the possible implementations of the second aspect.

According to a seventh aspect, a storage disk is provided. The storage disk belongs to a storage system. The storage system includes a host and a plurality of storage disks. The storage disk is configured to perform the methods provided in the third aspect, the fourth aspect, and the possible implementations of the third aspect and the fourth aspect.

According to an eighth aspect, a data storage management apparatus is provided. The apparatus is used in a host, and is configured to implement the method provided in the second aspect and the possible implementations of the second aspect.

According to a ninth aspect, a data storage management apparatus is provided. The apparatus is used in a first storage disk in a plurality of storage disks, and is configured to implement the method provided in the third aspect and the possible implementations of the third aspect.

According to a tenth aspect, a data storage management apparatus is provided. The apparatus is used in a second storage disk in a plurality of storage disks, and is configured to implement the method provided in the fourth aspect and the possible implementations of the fourth aspect.

According to an eleventh aspect, a computer-readable storage medium is provided. The computer-readable storage medium stores a computer program code. When the computer program code is run by a computer device, the computer device performs the methods provided in the first aspect, the second aspect, the third aspect, the fourth aspect, and the possible implementations of the first aspect, the second aspect, the third aspect, and the fourth aspect.

According to a twelfth aspect, a computer program product is provided. The computer program product includes a computer program code. When the computer program code is run by a computer device, the computer device performs the method provided in the first aspect, the second aspect, the third aspect, the fourth aspect, and the possible implementations of the first aspect, the second aspect, the third aspect, and the fourth aspect.

### BRIEF DESCRIPTION OF DRAWINGS

FIG. 1 is a diagram of a structure of a storage system according to an embodiment of the present disclosure;
FIG. 2 is a diagram of a structure of a host according to an embodiment of the present disclosure;
FIG. 3 is a diagram of a structure of a storage disk according to an embodiment of the present disclosure;
FIG. 4 is a diagram of a processing procedure of a data migration phase according to an embodiment of the present disclosure;
FIG. 5 is a diagram of storage space usage of each storage disk in a storage system according to an embodiment of the present disclosure;
FIG. 6 is a diagram of a process of migrating valid data according to an embodiment of the present disclosure;
FIG. 7 is a diagram of storage space usage of each storage disk after data storage management is completed according to an embodiment of the present disclosure;
FIG. 8 is a diagram of a processing procedure of updating metadata according to an embodiment of the present disclosure;
FIG. 9 is a diagram of a processing procedure of deleting data in a source storage disk according to an embodiment of the present disclosure;
FIG. 10 is a diagram of a structure of a storage system in which a check storage disk is pre-selected according to an embodiment of the present disclosure;
FIG. 11 is a diagram of a processing procedure of generating and storing check data according to an embodiment of the present disclosure;
FIG. 12 is a diagram of a processing procedure of generating and storing check data according to an embodiment of the present disclosure;
FIG. 13 is a diagram of a structure of a data storage management apparatus according to an embodiment of the present disclosure;
FIG. 14 is a diagram of a structure of a data storage management apparatus according to an embodiment of the present disclosure; and
FIG. 15 is a diagram of a structure of a data storage management apparatus according to an embodiment of the present disclosure.

### DESCRIPTION OF EMBODIMENTS

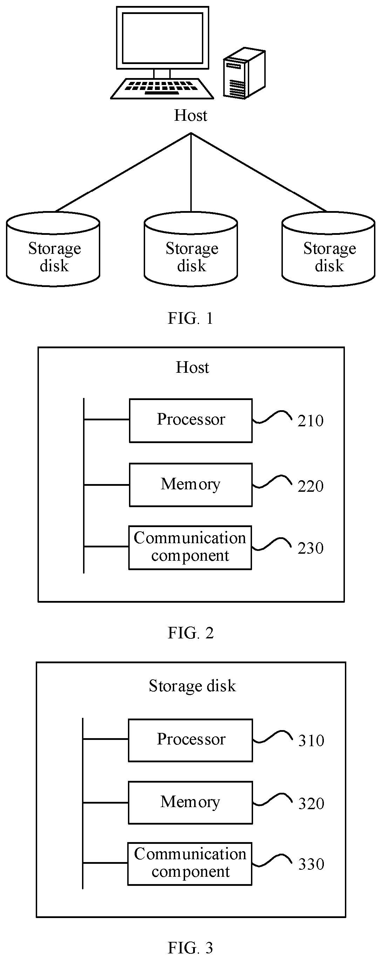

Embodiments of the present disclosure provide a data storage management method. The method may be applied to a storage system. The storage system may include a host and a plurality of storage disks. A system architecture diagram may be shown in FIG. 1. The host may be configured to manage the storage disk, for example, manage data writing and reading. The host may be any computer device, or may be a server device, a terminal, or the like. The storage disk may be a hard disk drive, a magnetic disk, or the like that have a specific processing capability. In embodiments of the present disclosure, a solid-state drive (solid-state drive, SSD) is used as an example for solution description. Other cases are similar, and details are not described again.

From a perspective of hardware composition, a structure of the host may be shown in FIG. 2, including a processor 210, a memory 220, and a communication component (which may also be referred to as a transceiver) 230.

The processor 210 may be any one or more of processors such as a central processing unit (central processing unit, CPU), a graphics processing unit (graphics processing unit, GPU), a micro processor (micro processor, MP), or a digital signal processor (digital signal processor, DSP). The processor 210 may be configured to process data information related to the method, for example, process migration information, and determine available space of a destination storage disk.

The memory 220 may include various volatile memories or non-volatile memories, such as an SSD or a dynamic random access memory (dynamic random access memory, DRAM). The memory 220 may be configured to store pre-stored data, intermediate data, and result data that are being processed, for example, available space of each storage disk in the storage system and a data amount of valid data in each storage disk.

The communication component 230 may be a wired network connector, a wireless fidelity (wireless fidelity, Wi-Fi) module, a Bluetooth module, a cellular communication module, or the like. The communication component 230 may be configured to perform data transmission with another device, and the another device may be a storage disk, a service server, or the like. For example, the communication component 230 sends migration information to a first storage disk.

The storage disk may have a specific data processing capability. Correspondingly, as shown in FIG. 3, the storage disk may include a processor 310, a memory 320, and a communication component (which may also be referred to as a transceiver) 330.

The processor 310 may be any one or more of processors such as a CPU, a GPU, an MP, or a DSP. The processor 310 may be configured to process various instructions or data information related to the method, for example, process received migration information.

The memory 320 may include various volatile memories or non-volatile memories, such as an SSD or a DRAM. The memory 320 may be configured to store pre-stored data, intermediate data, and result data that are being processed, for example, a data amount of valid data in each storage disk.

The communication component 330 may be a wired network connector, a Wi-Fi module, a Bluetooth module, a cellular communication module, or the like. The communication component 330 may be further configured to perform data transmission with another device, and the another device may be the host or the like. For example, the communication component 330 receives migration information sent by the host.

The following describes some concepts in embodiments of the present disclosure.

### Source storage disk

The source storage disk is a storage disk that has a large amount of invalid data and that requires garbage collection. For example, when a proportion of a data amount of invalid data stored in a storage disk in a total amount of stored data exceeds a first proportion threshold, the host determines the storage disk as a source storage disk.

### Destination storage disk

The destination storage disk is a storage disk that has relatively large remaining storage space and that can be configured to receive data migrated from another storage disk. For example, N storage disks having largest available space may be selected from the storage system as destination storage disks.

### Data block

The data block is a basic unit for data storage and transmission. Generally, a size of the data block may be set to a value ranging from 2 k to 512 k.

### Data strip

The data strip includes a fixed quantity of data blocks, and data strips in one storage system include a same quantity of data blocks. For example, a size of a data block is 8 k, a data strip includes four data blocks, and a fixed data amount of each data strip is 32 k.

### Metadata

The metadata, also referred to as mediation data or relay data, is data that describes data, mainly describes information about data attributes, and indicates a storage location, a path, a data identifier, a data size, and the like.

A process of generating metadata by the storage system may be as follows: When user equipment needs to store data, the user equipment sends the data to the host. The host allocates a storage node to the data based on information such as a data amount of the data, and then sends the data to the storage node. After storing the data, the storage node feeds back corresponding storage location information to the host, where the storage location information may include a storage disk identifier, a storage address, and the like. The host creates metadata based on the storage location information.

### Valid data and invalid data

The host stores a mapping relationship between a logical address and a physical address of data. When data is rewritten, a logical address of the data remains unchanged, a new physical address is allocated to the data, rewritten data is written into the new physical address, and a corresponding mapping relationship is also updated. However, the data before the rewrite that is stored at an original physical address is not deleted. The data before the rewrite is invalid data, and the data stored at the new physical address is valid data.

Generally, the storage system serves a service system. If the service system is large, a large amount of data is generated and stored in the storage system. In the storage system, some data may be frequently used, while some data is used less frequently, and gradually becomes expired data, that is, invalid data. The invalid data occupies large storage space, and the invalid data coexists with the valid data, affecting a speed of reading the valid data.

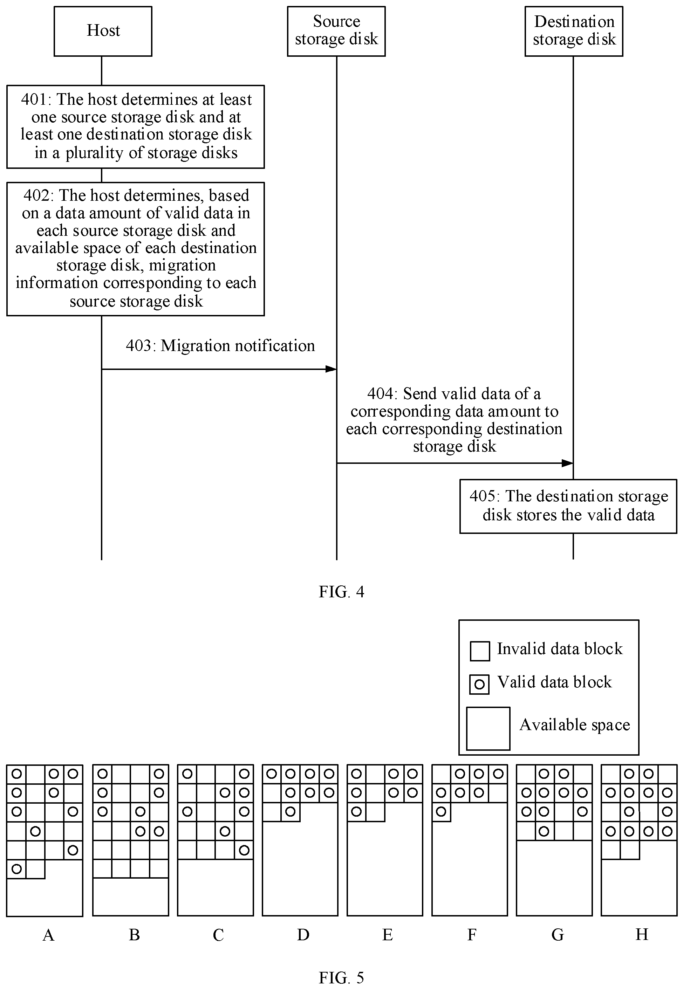

An embodiment of the present disclosure provides a data storage management method, which may also be referred to as a garbage collection processing method. A garbage collection process may include a data migration phase, a metadata update phase, and a deletion phase. The following describes a processing procedure of the data migration phase in detail. As shown in FIG. 4, the processing procedure may include the following steps.

401: A host determines at least one source storage disk and at least one destination storage disk in a plurality of storage disks.

The host may trigger garbage collection processing periodically (for example, once a week or once a month). Alternatively, an administrator may manually trigger garbage collection processing. For example, the administrator may operate a management terminal to send a trigger message to the host, to trigger garbage collection.

After triggering garbage collection processing, the host may determine the source storage disk and the destination storage disk in the plurality of storage disks included in a storage system. In a subsequent processing process, valid data in each source storage disk is allocated and migrated to each destination storage disk.

### A source storage disk is selected as follows:

The host may detect storage space usage of each storage disk in the storage system, and determine a data amount of invalid data in each storage disk and a total data amount in each storage disk. When a proportion of a data amount of invalid data stored in a storage disk in a total amount of stored data exceeds a first proportion threshold, the host determines the storage disk as a source storage disk. The first proportion threshold may be set by a skilled person based on experience. An excessively small first proportion threshold causes an excessively large amount of data to be migrated in a garbage collection processing process, occupying excessive processing resources and transmission resources. An excessively large first proportion threshold causes an excessively large amount of invalid data in a storage disk, causing a significant waste of storage resources. The first proportion threshold may be set by comprehensively considering the two aspects.

For example, as shown in FIG. 5 (a specific example used in this embodiment of the present disclosure is described by using a data block of a size of 8 k as an example), the storage system has eight storage disks A, B, C, D, E, F, G, and H, data amounts of valid data in the storage disks are respectively 80 k, 64 k, 64 k, 64 k, 56 k, 56 k, 80 k, and 96 k, data amounts of invalid data are respectively 96 k, 128 k, 96 k, 16 k, 24 k, 16 k, 48 k, and 48 k, the first proportion threshold is 50%, and proportions of the data amounts of the invalid data in the storage disks in total amounts of stored data are respectively 54%, 66%, 60%, 20%, 30%, 22%, 37%, and 33%. It can be learned that the proportions of the data amounts of the invalid data stored in A, B, and C in the total amounts of stored data exceed 50%, and therefore A, B, and C can be selected as source storage disks.

In addition, there are some possible selection methods. For example, a storage disk with a proportion of available space in total storage space being less than a second proportion threshold is selected as a source storage disk.

### A destination storage disk is selected as follows:

Method 1: N storage disks with largest available space are selected from the storage system as destination storage disks, where N may be an integer greater than or equal to 2, that is, more than two destination storage disks may be selected.

The quantity N of destination storage disks may be pre-specified by using an algorithm in the host, and N may be set based on actual experience with reference to a total quantity of storage disks, a garbage collection periodicity, and another factor. The host may determine available space of each storage disk based on a data amount of data stored in each storage disk and a total capacity of each storage disk. During garbage collection processing, the available space of each storage disk other than the source storage disk may be obtained (in this implementation, a storage disk cannot be selected as a source storage disk and a destination storage disk at the same time; and in another implementation, a storage disk may be both a source storage disk and a destination storage disk, and this implementation is described in the following content). Then, the storage disks are sorted in descending order of the available space, and the first N storage disks are selected from the sorted storage disks as destination storage disks.

For example, the storage system has eight storage disks A, B, C, D, E, F, G, and H, where A, B, and C are selected as source storage disks, D, E, F, G, and H have available space of 160 k, 160 k, 168 k, 128 k, and 112 k respectively, and a value of N is 3. In this case, the host may select the storage disks D, E, and F as destination storage disks.

Method 2: A storage disk whose available space is greater than a space threshold is selected as a destination storage disk.

The space threshold may be set based on actual experience with reference to a total quantity of storage disks, a garbage collection periodicity, and another factor.

For example, the space threshold is preset to 150 k. The storage system has eight storage disks A, B, C, D, E, F, G, and H, where A, B, and C are selected as source storage disks, and D, E, F, G, and H have available space of 160 k, 160 k, 168 k, 128 k, and 112 k respectively. Because the available space of D, E, and F is greater than the space threshold, D, E, and F may be selected as destination storage disks.

In addition, there are some possible methods. For example, a destination storage disk may be selected based on a total data amount of valid data in a source storage disk, so that total available space of the destination storage disk and the total data amount meet a specified relationship. For example, the specified relationship requires that the total available space is greater than a product of the total data amount and M, where M>1.

402: The host determines, based on a data amount of valid data in each source storage disk and available space of each destination storage disk, migration information corresponding to each source storage disk.

The migration information includes a destination storage disk corresponding to the source storage disk and a data amount of valid data to be sent by the source storage disk to each corresponding destination storage disk.

This step actually involves reallocating a storage disk to valid data. An allocation mechanism may be preset, and a load balancing mechanism may be used, or one storage disk can be preferentially used until space usage of the storage disk reaches a specified upper limit before a next storage disk is used, or the like. The load balancing mechanism is used as an example in this embodiment of the present disclosure. The load balancing mechanism ensures that storage space of each destination storage disk is occupied as evenly as possible.

The host may input the data amount of the valid data in each source storage disk and the available space of each storage disk into an algorithm of the load balancing mechanism. The algorithm may output the destination storage disk corresponding to each source storage disk, and output the data amount of the valid data sent by each source storage disk to each corresponding destination storage disk.

There are a plurality of possible internal processing manners of the algorithm. In a possible implementation, a total data amount of valid data in all source storage disks may be first determined. Then, the total data amount is allocated based on the available space of each destination storage disk and a principle of making remaining space of all destination storage disks the same as much as possible after the valid data is allocated, to obtain a data amount of valid data that needs to be allocated to each destination storage disk (which may be referred to as an allocated data amount for short). Then, the source storage disks may be selected one by one (which may be selected in a specified sequence or randomly selected). Each time one source storage disk is selected, destination storage disks corresponding to the source storage disk are selected one by one (which may be selected in a specified sequence or randomly selected). If an allocated data amount of a destination storage disk is greater than or equal to a data amount of valid data in the source storage disk, all valid data in the source storage disk may be allocated to the destination storage disk, and then a next source storage disk is selected for allocation; or if an allocated data amount of a destination storage disk is less than a data amount of valid data in the source storage disk, a part of valid data (a data amount of the part is equal to the allocated data amount of the destination storage disk) in the source storage disk may be allocated to the destination storage disk, and then a next destination storage disk is selected to continue to allocate remaining valid data in the source storage disk, until all valid data in the source storage disk is allocated. By analogy, the valid data in all the source storage disks may be allocated to the destination storage disks, to obtain the migration information corresponding to each source storage disk.

Any source storage disk may correspond to one destination storage disk, or may correspond to a plurality of destination storage disks. If a source storage disk corresponds to one destination storage disk, the source storage disk may send all valid data in the source storage disk to the destination storage disk. If a source storage disk corresponds to a plurality of destination storage disks, the source storage disk may separately send valid data stored in the source storage disk to the plurality of destination storage disks corresponding to the source storage disk, and a data amount corresponding to each destination storage disk is output by the algorithm.

For example, as shown in FIG. 5 (a specific example used in this embodiment of the present disclosure is described by using a data block of a size of 8 k as an example), the storage system has eight storage disks A, B, C, D, E, F, G, and H, the storage disks A, B, and C are selected as source storage disks, D, E, and F are selected as destination storage disks, data amounts of valid data in A, B, and C are respectively 80 k, 64 k, 64 k, and D, E, F have available space of 160 k, 160 k, and 168 k respectively. The host inputs information into the algorithm of the load balancing mechanism. The algorithm may output the following: A serves as a source storage disk and corresponds to destination storage disks E and F, a data amount of valid data that can be sent by A to E is 64 k, and a data amount of valid data that can be sent by A to F is 16 k; B serves as a source storage disk and corresponds to a destination storage disk D, and B may send all valid data in B to D; and C serves as a source storage disk and corresponds to a destination storage disk F, and C may send all valid data in C to F.

403: The host sends a migration notification to each source storage disk.

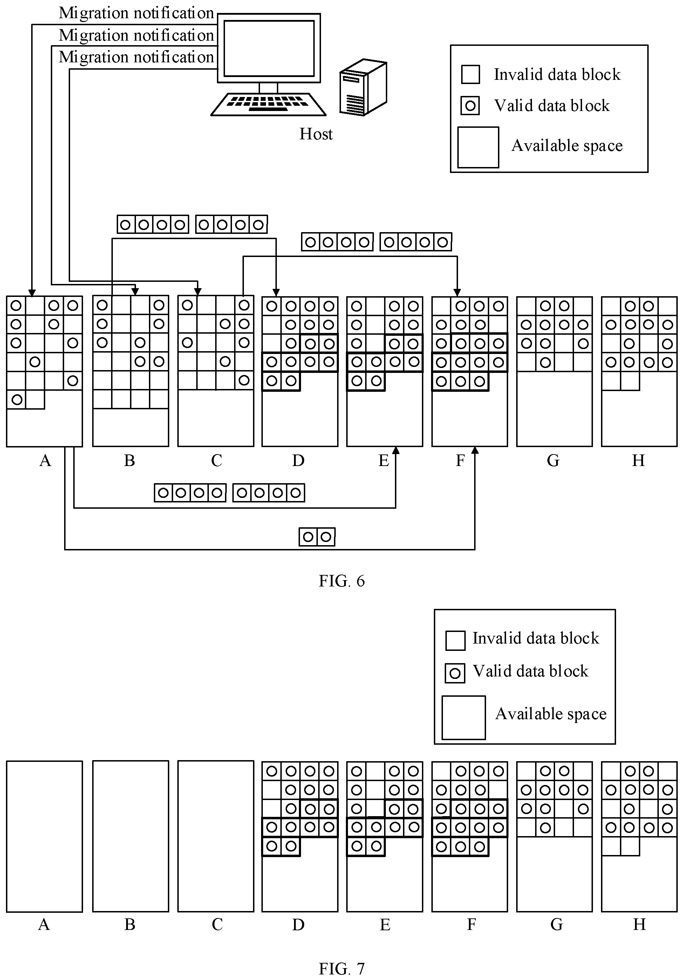

The migration notification sent by the host to any source storage disk may carry migration information corresponding to the source storage disk. For example, as shown in FIG. 6, the migration information sent by the host to a source storage disk A may be a data amount 80 k of valid data in the source storage disk A, destination storage disks E and F corresponding to the source storage disk A, and a data amount 64 k of valid data that can be sent by the source storage disk A to the destination storage disk E and a data amount 16 k of valid data that can be sent by the source storage disk A to the destination storage disk F.

In addition, the migration notification may further carry storage location information and a data identifier of the valid data in the source storage disk.

404: The source storage disk sends, based on the received migration information, the valid data of the corresponding data amount to each corresponding destination storage disk.

The valid data and the invalid data in the source storage disk may be stored in a mixed manner. After receiving the migration information, each source storage disk may first sort the valid data in the source storage disk, and then send the valid data of the corresponding data amount to each corresponding destination storage disk.

An operation of sorting the local valid data by each source storage disk may be: After receiving the storage location information of the valid data sent by the host, each source storage disk may copy the local valid data to cache space. Each source storage disk may divide the valid data copied to the cache space into at least one data strip with a fixed data amount. Further, in the migration information, the source storage disk may obtain each destination storage disk and the data amount corresponding to the destination storage disk, read valid data of the corresponding data amount in the destination storage disk from the cached valid data, and send the valid data to the destination storage disk.

For example, as shown in FIG. 6, a data amount of valid data in the source storage disk A is 80 k, and the valid data is cached in continuous storage space of the source storage disk A. Assuming that a preset fixed data amount of each data strip in this embodiment is 32 k, the valid data in the source storage disk A may be divided into two 32 k data strips and one 16 k data strip, and then determine, based on the migration information, that corresponding destination storage disks are the storage disks E and F, and amounts of to-be-migrated data corresponding to E and F are respectively 64 k and 16 k. In this case, the two 32 k data strips may be sent to E, and the one 16 k data strip may be sent to F.

The foregoing processing is performed by the source storage disk, so that a processing amount of the host can be reduced, and occupation of hardware resources of the host can be reduced.

405: The destination storage disk stores the valid data.

After receiving the valid data sent by the source storage disk, the destination storage disk may store the valid data. The destination storage disk may send a cache data deletion notification to the corresponding source storage disk, and the corresponding source storage disk may delete the cached valid data after receiving the notification. Alternatively, the destination storage disk may not send a cache data deletion notification to the corresponding source storage disk, and the corresponding source storage disk may retain the cached valid data for a fixed period of time (for example, one week) before deleting the cached valid data.

After sending the valid data to the destination storage disk, the source storage disk may delete the valid data and the invalid data (which may be all data stored before receiving the migration notification) that are stored in the source storage disk. Deletion may be triggered when it is confirmed that the valid data is sent completely, or after specified duration has elapsed since the sending is completed, or when a deletion notification is received from the host (this case is described in detail in the following content), or the like.

Then, storage space usage of each storage disk in the storage system may be shown in FIG. 7.

According to the method, the host is only responsible for determining the source storage disk, the destination storage disk, and an amount of data that needs to be transmitted, data distribution is completed by the source storage disk, and distributed data does not pass through the host. This can reduce occupation of hardware resources of the host. In addition, this can lower requirements on a storage capability of the host.

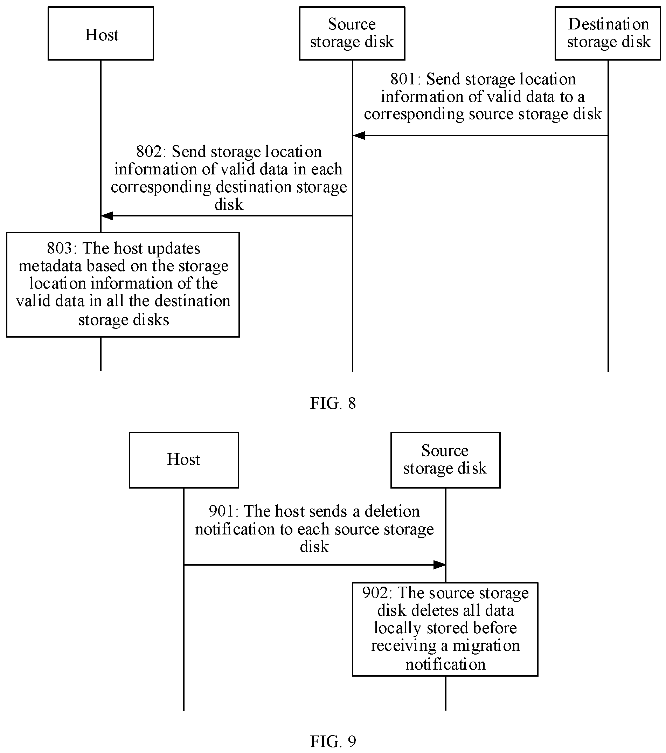

In this embodiment of the present disclosure, the host may store metadata corresponding to each piece of data. The metadata includes some related information of the corresponding data, and the related information may include storage location information. After the foregoing procedure is completed, metadata update processing may be performed. A corresponding processing procedure is shown in FIG. 8, and may include the following steps.

801: A destination storage disk sends storage location information of valid data to a corresponding source storage disk.

The storage location information may include a disk identifier of the destination storage disk and a physical address for storing the valid data.

After completing storing the valid data sent by the source storage disk, the destination storage disk may send a storage complete notification to the source storage disk, where the storage complete notification may carry the disk identifier of the destination storage disk, and a data identifier and a physical address of each piece of valid data. Alternatively, the destination storage disk may send a storage complete notification to the source storage disk after completing storing each piece of valid data, where the storage complete notification carries the disk identifier of the destination storage disk, and a data identifier and a physical address of current valid data that has been stored.

802: The source storage disk sends the storage location information of the valid data in each corresponding destination storage disk to the host.

Each time the source storage disk receives a storage complete notification sent by the destination storage disk, the source storage disk may forward the storage complete notification to the host.

803: The host updates metadata based on the storage location information of the valid data in all the destination storage disks.

For these pieces of valid data migrated in the foregoing procedure, before migration, the host should have recorded metadata of these pieces of valid data. After migration, storage locations of these pieces of valid data change. After receiving the storage complete notification, the host may read the disk identifier of the destination storage disk, the data identifier and the physical address of the valid data from the storage complete notification; search for, based on the data identifier of the valid data, metadata corresponding to the valid data; and then update a disk identifier of the destination storage disk and a physical address of the valid data in the metadata to the disk identifier of the destination storage disk and the physical address of the valid data in the storage complete notification.

In addition, in another implementation, the destination storage disk may directly send the storage location information of the valid data to the host, so that the host updates the metadata.

According to the method, the metadata can be updated in time, thereby ensuring normal data reading.

In this embodiment of the present disclosure, after completing metadata update processing, the host may delete valid data and invalid data that are stored in a source storage disk before the foregoing procedure processing is performed. A corresponding processing procedure is shown in FIG. 9, and may include the following steps:
901: The host sends a deletion notification to each source storage disk.
902: The source storage disk deletes all data locally stored before receiving a migration notification.

After deleting data, the source storage disk may send a deletion complete notification to the host. After receiving the deletion complete notification, the host may delete corresponding metadata of corresponding invalid data.

In addition, in another implementation, the host may not send a deletion notification to each source storage disk. In this case, each source storage disk may retain, for a fixed period of time (for example, one hour), all data stored before receiving a migration notification, and then delete the data.

According to the method, space of a storage disk can be released in time, thereby increasing resource utilization of the storage system.

In an implementation of this embodiment of the present disclosure, a storage disk may be both a source storage disk and a destination storage disk. When a destination storage disk is selected after a source storage disk is selected, a storage disk that meets a condition is selected from all storage disks (including all source storage disks) in the storage system as a destination storage disk. For a condition for serving as a destination disk, refer to Method 1, Method 2, and the like in step 401. When a destination storage disk is selected, available space of these storage disks that have been selected as source storage disks may be considered as total capacities of the storage disks. When a storage disk that has been selected as a source storage disk is selected as a destination storage disk corresponding to the storage disk, the storage disk may include a disk identifier of the storage disk and a corresponding amount of data that needs to be migrated in received migration information, and the storage disk may locally determine continuous storage space whose capacity is not less than the data amount, and then migrate valid data of the corresponding data amount to the continuous storage space. During metadata update processing, the storage disk may directly send storage location information of the locally migrated valid data to the host.

The method can implement better load balancing, thereby increasing resource utilization of the storage system.

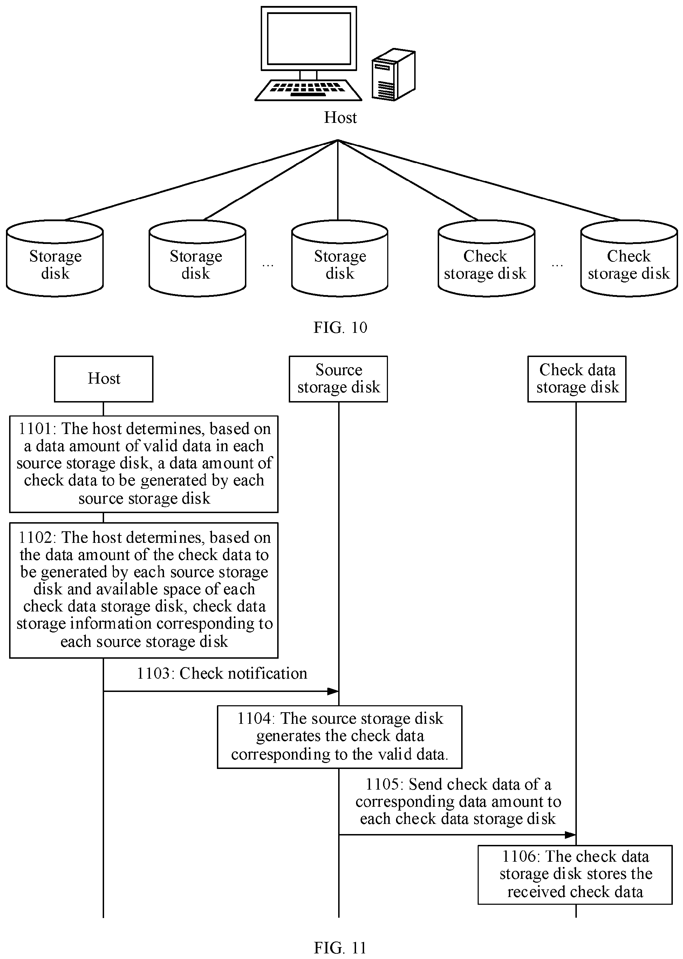

In this embodiment of the present disclosure, to recover data when the data is lost, check data may be calculated for stored data, and stored in at least one specified storage disk. Case 1: The at least one storage disk may be pre-selected in the plurality of storage disks. In other words, several storage disks are used only to store check data, and may be referred to as check data storage disks. Case 2: The at least one storage disk may alternatively be temporarily determined based on resource usage of the storage system. In other words, there is no storage disk specially used to store check data. In this embodiment of the present disclosure, the solution is described in detail by using Case 1 as an example. Another case is similar to Case 1, and details are not described again. A corresponding system architecture may be shown in FIG. 10.

When a plurality of check data storage disks are pre-selected in the storage system, a processing procedure of generating and storing check data is shown in FIG. 11, and may include the following steps.

1101: The host determines, based on a data amount of valid data in each source storage disk, a data amount of check data to be generated by each source storage disk.

A check data generation algorithm may set a check data generation ratio, that is, a ratio of a data amount of check data to a data amount of original data for generating the check data, for example, 2/3, 3/5, or 4/5.

The host may obtain the data amount of the valid data in each source storage disk, and multiply each data amount by the check data generation ratio, to obtain the data amount of the check data to be generated by each source storage disk.

1102: The host determines, based on the data amount of the check data to be generated by each source storage disk and available space of each check data storage disk, check data storage information corresponding to each source storage disk.

The check data storage information corresponding to the source storage disk includes a check data storage disk corresponding to the source storage disk and a data amount of check data to be sent by the source storage disk to each corresponding check data storage disk. Any source storage disk may correspond to one check data storage disk, or may correspond to a plurality of check data storage disks.

This step involves allocating a check data storage disk to check data. An allocation mechanism and an allocation process are similar to those in step 402 of reallocating a storage disk to valid data. Algorithms used in the two steps may be the same. A difference lies only in that: In step 1102, the algorithm inputs the data amount of the check data to be generated by each source storage disk and the available space of each check data storage disk, and in step 402, the algorithm inputs the data amount of the valid data in each source storage disk and the available space of each destination storage disk; and in step 1102, the algorithm outputs the check data storage information corresponding to each source storage disk, and in step 402, the algorithm outputs the migration information corresponding to each source storage disk.

1103: The host sends a check notification to each source storage disk.

The check notification sent by the host to any source storage disk may carry check data storage information corresponding to the source storage disk.

1104: The source storage disk generates check data corresponding to the valid data.

After receiving the check notification, each source storage disk may divide locally stored valid data based on a preset data amount, to obtain a plurality of groups of data. Each group of data is input into the check data generation algorithm, to generate check data corresponding to each group of data. For example, a source storage disk A groups local valid data, and each group includes five data blocks. Each group of data blocks is input into the check data generation algorithm, to generate a check data block. Each group of data blocks may correspondingly generate three check data blocks.

1105: The source storage disk sends the check data of the corresponding data amount to each check data storage disk based on the check data storage information.

In the check data storage information, the source storage disk may obtain each destination storage disk and the data amount corresponding to the destination storage disk, read the check data of the corresponding data amount in the destination storage disk from the check data calculated in step 1104, and send the check data to the destination storage disk.

1106: The check data storage disks store the received check data.

Then, the check data storage disk may feed back a check data storage complete notification to the host. The host may notify a check data storage disk in which original check data of the source storage disk is located to delete the original check data of the source storage disk.

In addition, in another implementation, when there is only one check data storage disk in the storage system, the host may send the pre-selected check data storage disk to the source storage disk in advance. In this case, the check data storage information may not be sent to the source storage disk any more, and after each source storage disk generates the check data, all check data may be sent to the check data storage disk.

According to the method, the check data is generated by the source storage disk, and the host does not need to run the check data generation algorithm, so that occupation of hardware resources of the host can be effectively reduced.

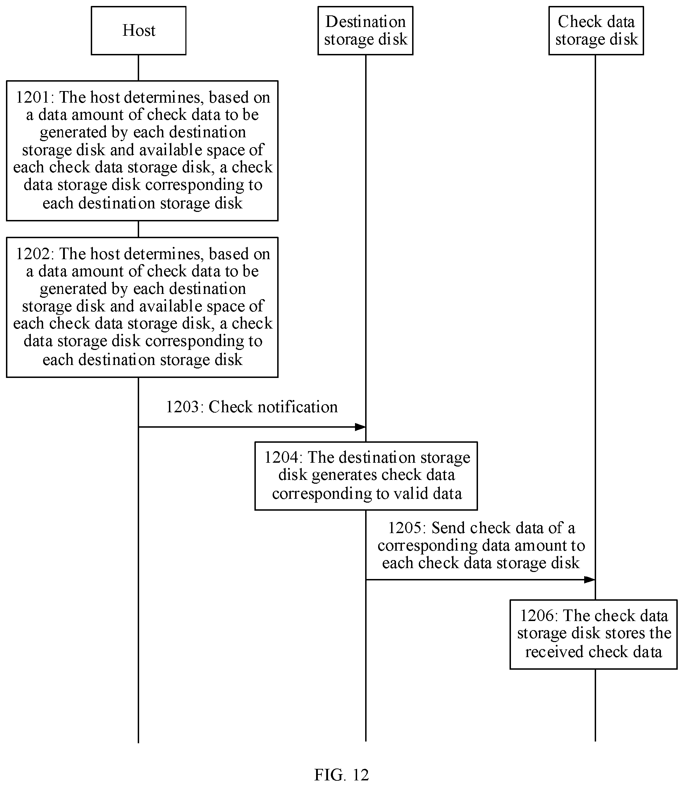

In the foregoing procedure, the check data is generated in the source storage disk. In addition, in this embodiment of the present disclosure, the check data may alternatively be generated in the destination storage disk. A corresponding processing procedure is shown in FIG. 12, and may include the following steps.

1201: The host determines, based on a data amount of valid data migrated in each destination storage disk, a data amount of check data to be generated by each destination storage disk.

Involved destination storage disks may include all the destination storage disks selected in step 401.

1202: The host determines, based on the data amount of the check data to be generated by each destination storage disk and available space of each check data storage disk, a check data storage disk corresponding to each destination storage disk.

Check data storage information corresponding to a destination storage disk includes a check data storage disk corresponding to the destination storage disk and a data amount of check data to be sent by the destination storage disk to each corresponding check data storage disk. Any destination storage disk may correspond to one check data storage disk, or may correspond to a plurality of check data storage disks.

1203: The host sends a check notification to each destination storage disk.

The check notification sent by the host to any destination storage disk may carry check data storage information corresponding to the destination storage disk.

1204: The destination storage disk generates check data corresponding to the valid data.

1205: The destination storage disk sends the check data of the corresponding data amount to each check data storage disk based on the check data storage information.

1206: The check data storage disk stores the received check data.

A specific processing manner of the foregoing procedure is similar to the procedure shown in FIG. 11. For details, refer to corresponding description content. Details are not described herein again.

According to the method, the check data is generated by the destination storage disk, and the host does not need to run a check data generation algorithm, so that occupation of hardware resources of the host can be effectively reduced.

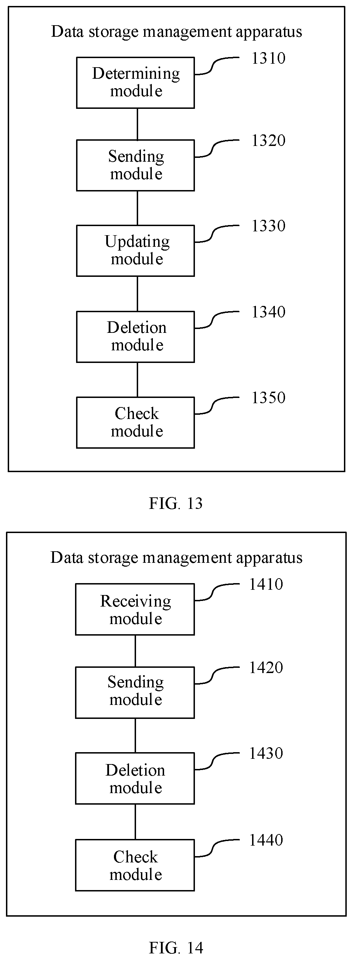

Based on a same technical concept, an embodiment of the present disclosure provides a data storage management apparatus. The apparatus is used in a host in the foregoing storage system. As shown in FIG. 13, the apparatus includes following modules.

A determining module 1310, configured to: determine at least one source storage disk and at least one destination storage disk in a plurality of storage disks; and determine, based on a data amount of valid data in each source storage disk and available space of each destination storage disk, migration information corresponding to each source storage disk. The migration information corresponding to the source storage disk includes a destination storage disk corresponding to the source storage disk and a data amount of valid data to be sent by the source storage disk to each corresponding destination storage disk. Specifically, processing functions of the foregoing steps 401 and 402 and another implicit step may be implemented.

A sending module 1320, configured to send corresponding migration information to each source storage disk. The migration information indicates the source storage disk to send the valid data to each corresponding destination storage disk. Specifically, the processing function of step 403 and another implicit step may be implemented.

In a possible implementation, the apparatus further includes an updating module 1330, configured to: receive storage location information that is of valid data in the corresponding destination storage disk and that is sent by each source storage disk; and update metadata based on the storage location information of the valid data in each destination storage disk. Specifically, the processing function of step 703 and another implicit step may be implemented.

In a possible implementation, the apparatus further includes a deletion module 1340, configured to send a deletion notification to each source storage disk. Specifically, the processing function of step 801 and another implicit step may be implemented.

In a possible implementation, the plurality of storage disks include a plurality of check data storage disks; and the apparatus further includes a check module 1350, configured to: determine, based on the data amount of the valid data in each source storage disk, a data amount of check data to be generated by each source storage disk; determine, based on the data amount of check data to be generated by each source storage disk and available space of each check data storage disk, check data storage information corresponding to each source storage disk, where the check data storage information corresponding to the source storage disk includes a check data storage disk corresponding to the source storage disk and a data amount of check data to be sent by the source storage disk to each corresponding check data storage disk; and send the corresponding check data storage information to each source storage disk. Specifically, processing functions of the foregoing steps 1001, 1002, 1003, 1101, 1102, and 1103, and another implicit step may be implemented.

In a possible implementation, the source storage disk is a storage disk in which a proportion of a data amount of stored invalid data in a total amount of stored data exceeds a proportion threshold, and the destination storage disk is N storage disks with largest available space in the plurality of storage disks, where N is an integer greater than or equal to 2.

The determining module 1310, the sending module 1320, the updating module 1330, the deletion module 1340, and the check module 1350 may be implemented by a processor, or may be implemented by a processor in cooperation with a memory and a communication component.

An embodiment of the present disclosure further provides a data storage management apparatus. The apparatus is used in a first storage disk that is in a plurality of storage disks in the foregoing storage system and that is selected as a source storage disk. As shown in FIG. 14, the apparatus includes following modules.

A receiving module 1410, configured to receive migration information sent by a host, where the migration information indicates that a first storage disk is a source storage disk determined by the host, and includes a destination storage disk corresponding to the source storage disk and a data amount of valid data to be sent by the source storage disk to each corresponding destination storage disk.

A sending module 1420, configured to send the valid data of the corresponding data amount to each destination storage disk based on the migration information. Specifically, the processing function of step 404 and another implicit step may be implemented.

In a possible implementation, the sending module 1420 is configured to: copy locally stored valid data to cache space; and for each destination storage disk, read the valid data corresponding to the destination storage disk from the stored valid data in the cache space based on the data amount corresponding to the destination storage disk, and send the valid data to the destination storage disk. Specifically, the processing function of step 404 and another implicit step may be implemented.

In a possible implementation, the receiving module 1410 is further configured to receive storage location information that is of the valid data and that is sent by each destination storage disk.

The sending module 1420 is further configured to send the storage location information of the valid data in each destination storage disk to the host. Specifically, the processing function of step 702 and another implicit step may be implemented.

In a possible implementation, the receiving module 1410 is configured to receive a deletion notification sent by the host.

The apparatus further includes a deletion module 1430, configured to delete the stored valid data and invalid data. Specifically, the processing function of step 802 and another implicit step may be implemented.

In a possible implementation, the apparatus further includes a check module 1440, configured to: receive check data storage information sent by the host, where the check data storage information includes a check data storage disk corresponding to a source storage disk and a data amount of check data to be sent by the source storage disk to each corresponding check data storage disk, and the check data storage disk belongs to the plurality of storage disks; generate check data corresponding to the valid data; and send the check data of the corresponding data amount to each check data storage disk based on the check data storage information. Specifically, processing functions of the foregoing steps 1004 and 1005 and another implicit step may be implemented.

The receiving module 1410, the sending module 1420, the deletion module 1430, and the check module 1440 may be implemented by a processor, or implemented by a processor in cooperation with a memory, a communication component, and a display component.

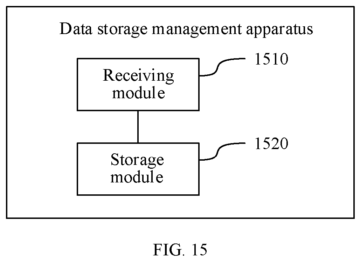

An embodiment of the present disclosure further provides a data storage management apparatus. The apparatus is used in a second storage disk that is in a plurality of storage disks in the foregoing storage system and that is selected as a destination storage disk. As shown in FIG. 15, the apparatus includes following modules.

A receiving module 1510, configured to receive valid data sent by a first storage disk in the plurality of storage disks, where the first storage disk is a source storage disk determined by a host, and the second storage disk is a destination storage disk corresponding to the source storage disk and is determined by the host. Specifically, the processing function of step 405 and another implicit step may be implemented.

A storage module 1520, configured to store the valid data. Specifically, the processing function of step 402 and another implicit step may be implemented.

In a possible implementation, the storage module 1520 is further configured to send storage location information of the valid data to the first storage disk. Specifically, the processing function of step 701 and another implicit step may be implemented.

The receiving module 1510 and the storage module 1520 may be implemented by a processor, or may be implemented by a processor in cooperation with a memory, a communication component, and a display component.

By using the apparatus, the host is only responsible for determining the source storage disk, the destination storage disk, and a data amount that needs to be transmitted. Data distribution is completed by the source storage disk, and distributed data does not pass through the host. This can reduce occupation of hardware resources of the host. In addition, this can lower requirements on a storage capability of the host.

When the data storage management apparatus provided in the foregoing embodiments performs data storage management, division of the foregoing function modules is merely used as an example for illustration. In actual application, the foregoing functions may be allocated to different function modules and implemented based on a requirement, that is, an inner structure of user equipment is divided into different function modules to complete all or some of the functions described above. In addition, the data storage management apparatus provided in the foregoing embodiments pertain to a same concept as method embodiments of the data storage management. For a specific implementation process of the data storage apparatus, refer to the method embodiments. Details are not described herein again.

An embodiment of the present disclosure further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state drive), or the like. The computer-readable storage medium includes instructions, and the instructions instructs a computing device to perform a service processing method, or instructs a computing device to perform a service processing method.

Finally, the foregoing embodiments are merely intended for describing the technical solutions of the present disclosure other than limiting the present disclosure. Although the present disclosure is described in detail with reference to the foregoing embodiments, a person of ordinary skill in the art should understand that they may still make modifications to the technical solutions described in the foregoing embodiments or make equivalent replacements to some technical features thereof, without departing from protection the protection scope of the technical solutions of embodiments of the present disclosure.

## Claims

1. A data storage management method, wherein the method is applied to a storage system, the storage system comprises a host and a plurality of storage disks, and the method comprises:
determining, by the host based on a data amount of valid data in a source storage disk in the plurality of storage disks and available space of a destination storage disk in the plurality of storage disks, migration information corresponding to the source storage disk, wherein the migration information corresponding to the source storage disk comprises a destination storage disk corresponding to the source storage disk and a data amount of valid data to be sent by the source storage disk to the destination storage disk;
sending, by the host, the migration information to the source storage disk;
sending, by the source storage disk, the valid data of the corresponding data amount to the destination storage disk based on the migration information; and
storing, by the destination storage disk, the valid data.

2. The method according to claim 1, wherein after storing, by the destination storage disk, the valid data, the method further comprises:
sending, by the destination storage disk, storage location information of the valid data to the source storage disk;
sending, by the source storage disk, the storage location information of the valid data to the host; and
updating, by the host, metadata based on the storage location information of the valid data.

3. The method according to claim 1 or 2, wherein the method further comprises:
sending, by the host, a deletion notification to the source storage disk; and
deleting, by the source storage disk, the stored valid data and stored invalid data.

4. The method according to any one of claims 1 to 3, wherein the method further comprises:
determining, by the host based on the data amount of the valid data in the source storage disk, a data amount of check data that is to be generated by the source storage disk and that corresponds to the valid data;
determining, by the host based on the data amount of the check data and available space of a check data storage disk, check data storage information corresponding to the source storage disk, wherein the check data storage information corresponding to the source storage disk comprises a check data storage disk corresponding to the source storage disk and a data amount of check data to be sent by the source storage disk to the check data storage disk;
sending, by the host, the check data storage information to the source storage disk;
generating, by the source storage disk, the check data corresponding to the valid data; and
sending, by the source storage disk, the check data of the corresponding data amount to the check data storage disk based on the check data storage information.

5. The method according to any one of claims 1 to 4, wherein the source storage disk is a storage disk in which a proportion of a data amount of stored invalid data in a total amount of stored data exceeds a proportion threshold, and the destination storage disk is N storage disks with largest available space in the plurality of storage disks, wherein N is an integer greater than or equal to 2.

6. The method according to any one of claims 1 to 5, wherein sending, by the source storage disk, the valid data of the corresponding data amount to the destination storage disk based on the migration information comprises:
copying, by the source storage disk, locally stored valid data to cache space; and
reading, by the source storage disk, the valid data corresponding to the destination storage disk from the stored valid data in the cache space based on the data amount corresponding to the destination storage disk, and sending the valid data to the destination storage disk.

7. A storage system, wherein the storage system comprises a host and a plurality of storage disks, wherein
the host is configured to determine, based on a data amount of valid data in a source storage disk in the plurality of storage disks and available space of a destination storage disk in the plurality of storage disks, migration information corresponding to the source storage disk, wherein the migration information corresponding to the source storage disk comprises a destination storage disk corresponding to the source storage disk and a data amount of valid data to be sent by the source storage disk to the destination storage disk; and send the migration information to the source storage disk;
the source storage disk is configured to send the valid data of the corresponding data amount to the destination storage disk based on the migration information; and
the destination storage disk is configured to store the valid data.

8. The storage system according to claim 7, wherein the destination storage disk is further configured to send storage location information of the valid data to the corresponding source storage disk;
the source storage disk is further configured to send the storage location information of the valid data to the host; and
the host is further configured to update metadata based on the storage location information of the valid data.

9. The storage system according to claim 7 or 8, wherein the host is further configured to send a deletion notification to the source storage disk; and
the source storage disk is further configured to delete the stored valid data and stored invalid data.

10. The storage system according to any one of claims 7 to 9, wherein the host is further configured to determine, based on the data amount of the valid data in the source storage disk, a data amount of check data that is to be generated by the source storage disk and that corresponds to the valid data; determine, based on the data amount of the check data and available space of a check data storage disk, check data storage information corresponding to the source storage disk, wherein the check data storage information corresponding to the source storage disk comprises a check data storage disk corresponding to the source storage disk and a data amount of check data to be sent by the source storage disk to the check data storage disk; and send the check data storage information to the source storage disk; and
the source storage disk is further configured to generate the check data corresponding to the valid data, and send the check data of the corresponding data amount to the check data storage disk based on the check data storage information.

11. The storage system according to any one of claims 7 to 10, wherein the source storage disk is a storage disk in which a proportion of a data amount of stored invalid data in a total amount of stored data exceeds a proportion threshold, and the destination storage disk is N storage disks with largest available space in the plurality of storage disks, wherein N is an integer greater than or equal to 2.

12. The storage system according to any one of claims 7 to 11, wherein the source storage disk is configured to:
copy locally stored valid data to cache space; and
read the valid data corresponding to the destination storage disk from the stored valid data in the cache space based on the data amount corresponding to the destination storage disk, and send the valid data to the destination storage disk.

13. A host, wherein the host belongs to a storage system, the storage system comprises the host and a plurality of storage disks, and the host comprises a processor, a transceiver, and a memory, wherein
the processor is configured to determine, based on a data amount of valid data in a source storage disk in the plurality of storage disks and available space of a destination storage disk in the plurality of storage disks that are stored in the memory, migration information corresponding to the source storage disk, wherein the migration information corresponding to the source storage disk comprises a destination storage disk corresponding to the source storage disk and a data amount of valid data to be sent by the source storage disk to the destination storage disk; and
the transceiver is configured to send the migration information to the source storage disk, wherein the migration information indicates the source storage disk to send the valid data to the destination storage disk.

14. The host according to claim 13, wherein after sending the migration information to the source storage disk, the transceiver is further configured to receive storage location information that is of the valid data in the corresponding destination storage disk and that is sent by the source storage disk; and
the processor is further configured to update metadata based on the storage location information of the valid data.

15. The host according to claim 13 or 14, wherein the transceiver is further configured to send a deletion notification to the source storage disk.

16. The host according to any one of claims 13 to 15, wherein the processor is further configured to determine, based on the data amount of the valid data in the source storage disk, a data amount of check data that is to be generated by the source storage disk and that corresponds to the valid data; and determine, based on the data amount of the check data to be generated by the source storage disk and available space of a check data storage disk, check data storage information corresponding to the source storage disk, wherein the check data storage information corresponding to the source storage disk comprises a check data storage disk corresponding to the source storage disk and a data amount of check data to be sent by the source storage disk to the check data storage disk; and
the transceiver is further configured to send the check data storage information to the source storage disk.

17. The host according to any one of claims 13 to 16, wherein the source storage disk is a storage disk in which a proportion of a data amount of stored invalid data in a total amount of stored data exceeds a proportion threshold, and the destination storage disk is N storage disks with largest available space in the plurality of storage disks, wherein N is an integer greater than or equal to 2.

18. A first storage disk, wherein the first storage disk belongs to a storage system, the storage system comprises a host and a plurality of storage disks, the first storage disk is any one of the plurality of storage disks, and the first storage disk comprises a processor, a memory, and a transceiver, wherein
when the transceiver receives migration information sent by the host, the processor is configured to control, based on the migration information, the transceiver to send valid data of a corresponding data amount to a destination storage disk, wherein the migration information indicates that the first storage disk is a source storage disk, and comprises the destination storage disk corresponding to the source storage disk and a data amount of valid data to be sent by the source storage disk to the destination storage disk; and
when the transceiver receives valid data sent by a second storage disk in the plurality of storage disks, the memory is configured to store the valid data.

19. The first storage disk according to claim 18, wherein the processor is configured to control, based on the migration information, the memory to copy stored valid data to cache space; and
the transceiver is configured to: for each destination storage disk, read valid data corresponding to the destination storage disk from the stored valid data in the cache space based on a data amount corresponding to the destination storage disk, and send the valid data to the destination storage disk.

20. The first storage disk according to claim 18 or 19, wherein the transceiver is further configured to: receive storage location information that is of the valid data and that is sent by the destination storage disk; and send the storage location information of the valid data to the host.

21. The first storage disk according to any one of claims 18 to 20, wherein the transceiver is further configured to receive a deletion notification sent by the host; and
the processor is further configured to delete the valid data and invalid data that are stored in the memory.

22. The first storage disk according to any one of claims 18 to 21, wherein the transceiver is further configured to receive check data storage information sent by the host, wherein the check data storage information comprises a check data storage disk corresponding to the source storage disk and a data amount of check data to be sent by the source storage disk to the check data storage disk;
the processor is further configured to generate check data corresponding to the valid data; and the transceiver is further configured to send the check data of the corresponding data amount to the check data storage disk based on the check data storage information.

23. The first storage disk according to any one of claims 18 to 22, wherein the transceiver is further configured to send storage location information of the valid data to the second storage disk after the memory stores the valid data.
